# EUROPÄISCHE PATENTANMELDUNG

(11) **EP 0 743 143 A1**
(43) Veröffentlichungstag der Anmeldung: **20.11.1996**
(21) Anmeldenummer: 96107161.0
(22) Anmeldetag: 07.05.1996
(51) Int. Cl.: B25J 9/08, B25J 19/00

(54) **Multiblock-Robot**

(30) Priorität: 16.05.1995 DE 19517852
(71) Anmelder: Kochanneck, Uwe, D-44145 Dortmund (DE)
(72) Erfinder: Kochanneck, Uwe, D-44145 Dortmund (DE)

(57) **Zusammenfassung**

Bei einem Robotsystem mit robot-spezifischen Wirkungsweisen, das aus annähernd baugleichen Robot-Block Normteilen, den Multiblocks besteht, sollen die Vorteile der flexiblen Multiachsen-Anwendungen durch die weitere Auflösung der Multiblocks in standardisierte Untergruppen, durch die Einführung von baugleichen Zentralgehäusen und von annähernd baugleichen Flanschaufsteckgehäusen noch gesteigert, die Wärmeableitung wahlweise beieinflußt werden, die Integration von Multiblock-Robot Einbauelementen vereinfacht und die systemkompatiblem voll funktionsfähige externe Anwendung ermöglicht und somit die Anwendungsbreite noch erweitert werden. Zur Lösung dieser Aufgabe ist gemäß der Erfindung vorgesehen, daß zusätzlich zu den Robot-Block-Normteilen (1) die aus einem Zentralgehäuse (9) bestehen, das sowohl die Antriebs-, Basisgetriebe- und Generatoreinheiten als auch die notwendigen Einbauelemente (11) für selbstoperierende Basisfunktionen aufnehmen, Robot-Block-Normteile (1) mit Flanschaufsteckgehäusen (9') eingesetzt werden, so daß ein Zentralgehäuse (9) gebildet wird in dem die Antriebs-, Basisgetriebe- und Generatoreinheiten und die Einbauelemente (11) der Basis- und Steuerungselektronik für diese Einheiten untergebracht werden und in Flanschaufsteckgehäusen (9') mit unterschiedlicher, weitgehend baugleicher Kontour die Einbauelmente (11') für weiterreichende selbstoperierende Funktionen untergebracht werden und durch den Aufsteckvorgang, die Strom- und Kommunikationsverbindung zwischen den Flanschaufsteckgehäusen (9') und dem Zentralgehäuse (9) geschlossen wird.

## Beschreibung

Die Erfindung betrifft ein Robotsystem mit robot-spezifischen Wirkungsweisen der im Oberbegriff des Patentanspruchs 1 genannten Art. Ein derartiges Robotsystem ist aus der Patentschrift DE 40 30 119 C2 bekannt. Diese Anordnung erbringt den Vorteil, daß zielgerichtete Robot-Gesamtsysteme zu standardisierten, annähernd baugleichen Robot-Block-Normteilen aufgelöst werden, die mit minimalem Aufwand in Entwicklung und Konstruktion erstellt werden können und mit wenigen Handgriffen von den Anwendern selbst für das ursprünglich angestrebte Wirkungsspektrum eingesetzt oder zu anderen Robot-Systemlösungen zusammengesteckt werden können. Ferner ist gemäß DE 41 41 241 A1 ein Robotsystem bekannt, daß die Vorteile des flexiblen Multiachsen-Robotsystems in der Funktion und Anwendungsflexibilität und in der Anwendungsbreite noch erweitert und dabei gleichzeitig die Baumaße reduziert.

Aufgabe der vorliegenden Erfindung ist es, die Vorteile dieser flexiblen Multiachsen-Robotsysteme durch die Einführung von Flanschaufsteckgehäusen in der Standardisierung, wirtschaftlichen Herstellung, Funktionalität und Anwendungsbreite noch zu erweitern und gleichzeitig die Benutzerflexibilität noch zu erhöhen.

Dies ist gemäß der Erfindung dadurch erreicht, daß zusätzlich zu den annähernd baugleichen Robot-Block-Normteilen die von einem Gehäuse umgeben sind, das sowohl die Antriebs-, Basisgetriebe und Generatoreinheiten als auch die notwendigen Einbauelemente für eine selbstopetierende Funktion aufnehmen, Robot-Block-Normteile mit annähernd baugleichen Flanschaufsteckgehäusen eingesetzt werden, so daß ein Zentralgehäuse gebildet wird in dem die Antriebs-, Basisgetriebe und Generatoreinherten und die Einbauelemente der Basis- und Steuerungselektronik für diese Einheiten untergebracht wird und in aufsteckbaren Flanschaufsteckgehäusen die Einbauelmente für eine selbstoperierende Funktion untergebracht werden und durch den Aufsteckvorgang, die Strom- und Kommunikationsverbindung zwischen den Flanschaufsteckgehäusen und dem Zentralgehäuse geschlossen wird.

Hiermit ist gegenüber dem Stand der Technik erreicht, daß die Vielfalt, Funktion und wirtschaftliche Herstellung der Baugruppen der Multiblock-Robots und anderer Multiblock-Multiachsen-Systeme durch weitere Auflösung der Robot-Block-Normteile in standardisierte Untergruppen, noch gesteigert wird. Außerdem kann die Wärmeableitung wahlweise positiv beeinflußt werden. Gleichzeitig wird die Integration von Multiblock-Robot Einbauelementen vereinfacht und die Multiblock-Robot systemkompatible, voll funktionsfähige externe Anwendung dieser Multiblock-Robot Einbauelemente ermöglicht und somit die Anwendungsbreite der Multiblock-Robot-Standardbauteile noch erweitert.

Ausgestaltungen der Erfindung sind in den Unteransprüchen genannt.

Die Erfindung wird im folgenden anhand von Ausführungsbeispielen, mit Bezug auf die Zeichnung näher erläutert. In dieser zeigt
Fig. 1 die Vorderansicht mit mittigem Teilschnitt eines Multiblock-Roboter Mittel- und Oberteils mit zwei Multiblocks 1 mit je zwei horizontalen und zwei vertikalen Drehflansch-Steckverbindungen 2 vor dem Zusammenstecken, das in Pfeilrichtung an den jeweils gegenüberliegenden Drehflansch-Steckverbindungen 2 erfolgt und in Kopf-Position vertikal ein Flanschaufsteckgehäuse 9' vorsieht, während in horizontaler Richtung jeweils weitere Flanschaufsteckgehäuse 9' aufgesteckt werden.
Fig. 2 Die Seitenansicht der Ausführung gemäß der Fig. 1 in verkleinertem Maßstab, wobei die angedeuteten Bruchlinien in den Bauteilen, die mitgeführten Strom- und Kommunikationskanäle 3 mit den inneren und äußeren Schleifring- und Induktivkörpern 10',13',10'',13'' umgrenzen.
Fig. 3 Die Seitenansicht der Ausführung gemäß der Fig. 2 in vergrößertem Maßstab mit zusammengesteckten Flanschaufsteckgehäusen 9' ohne die Zentralgehäuse 9 und das Flanschaufsteckgehäuse 9' in Kopfposition.
Fig. 4 die Vorderansicht eines Multiblock-Roboter Oberteils mit mittigem Teilschnitt von zwei zusammengesteckten Multiblocks 1 mit Flanschaufsteckgehäusen 9'.
Fig. 5 die Vorderansicht eines Multiblock-Roboter Arm-Seitenteils mit mittigem Teilschnitt durch das Zentralgehäuse 9' und vor dem Zusammenstecken mit einem Flanschaufsteckgehäuse 9' in Fußposition, das in Pfeilrichtung erfolgt.
Fig. 6 Die Vorderansicht eines Multiblock-Roboter Arms mit Oberarmgelenk bestehend aus zwei Zentralgehäusen 9 im Teilschnitt und vor dem Zusammenstecken in Pfeilrichtung, mit einem Flanschaufsteckgehäuse 9' in Fußposition und weiteren Flanschaufsteckgehäusen 9' im Schnitt und in bereits zusammengesteckter Position.
Fig. 7 die Seitenansicht eines Zentralgehäuses 9' gemäß der Fig. 5 und der Fig 6 eines Multiblocks 1 mit einem Flanschaufsteckgehäuse 9' in Pfeilrichtung vor dem Zusammenstecken und gegenüberliegend die erfolgte Steckverbindung des Zentralgehäuses 9 mit einem weiteren Flanschaufsteckgehäuse 9'.
Fig. 8 Die Vorderansicht eines Elektro-Fahrzeug-Antriebsachsendetails das aus Multiblocks 1 mit Zentralgehäusen 9 in Pfeilrichtung zusammengesteckt wird.

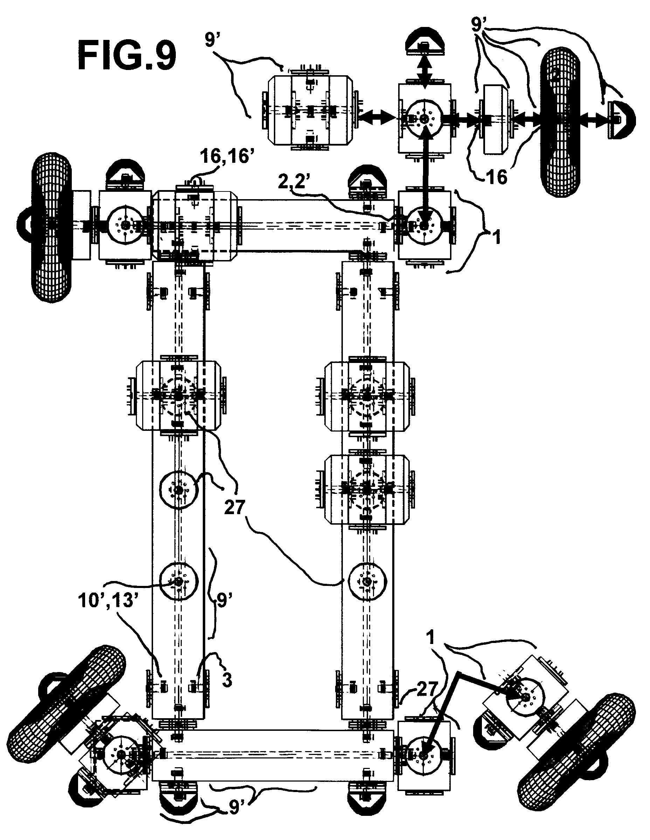

Fig. 9 Die Draufsicht auf den Grundrahmen mit Antriebsachsen eines Elektro-Fahrzeugs, das aus Multiblocks 1 mit Zentralgehäusen 9' zusammengesteckt ist und in Pfeilrichtung die Aufsteckrichtung der Antriebseinheiten vor dem Zusammenstecken darstellt.

### Fig. 1, Fig. 2

Der obere Multiblock 1 soll für die zentrale Steuerung eines Multiblock-Roboters als Computer-Einheit mit Fernsteuerungsmöglichkeit dienen und der untere Multiblock 1 die Energieversorgung über Baterien für eine autonome, selbstoperierende Funktion sicherstellen. Beide Multiblocks 1 werden mit identischem Zentralgehäuse 9 ausgeführt, die lediglich in der Lage zueinander um 90° gedreht, für den Aufsteckvorgang angeordnet sind. Die Zentralgehäuse 9 nehmen die horizontalen und vertikalen, kugelgelagerten Drehflansch-Steckverbindungen 2 mit Einraststeckern 2' und federbelasteten Klemmhebeln mit Stecker-Einheiten 16 und den Steckkontakten 16' und den Steckerbuchsen-Einheiten 17 mit Steckerbuchsen 17' mit den Strom- und Kommunikationskanälen 3 und den innenliegenden Strom- und Versorgungs-, sowie Kommunikationsleitungen, die inneren und äußeren Schleifring- und Induktivkörper 10',10'',13',13'', den Schleifring- und Induktivkörper-Haltern 15 sowie die zugehörigen Antriebs- und Basisgetriebe, gegebenenfalls Generator-Einheiten auf. Zusätzlich zu den Drehflansch-Steckverbindungen 2 werden frontal und rückseitig Aufsteckflansche 27,27', vorgesehen die nicht angetrieben werden und nicht auf Kugellagern drehbar sind und Aufsteckflansche 27'' die nicht angetrieben werden, ansonsten jedoch identisch wie die Drehflansch-Steckverbindungen 2 mit Kugellager-Drehverbindungen, Einraststeckern 2' und federbelasteten Klemmhebeln, mit Stecker-Einheiten 16 und den Steckkontakten 16' und den Steckerbuchsen-Einheiten 17 mit Steckerbuchsen 17'mit Strom- und Kommunikationskanälen 3, den innen liegenden Strom- und Versorgungsleitungen und den zugehörigen inneren und äußeren Schleifring- und Induktivkörpern 10',10'',13',13', sowie den Schleifring- und Induktivkörper-Haltern 15 ausgerüstet sind. Die Wahl der Ausrüstung mit einem der Aufsteckflansche 27,27' oder 27'' und deren Positionierung an den Zentralgehäusen 9 ist beliebig, erfolgt in den meisten Anwendungen jedoch analog der Anordnung der Drehflansch-Steckverbindungen 2, so daß jeweils auf der Frontseite eines Zentralgehäuses 9 eine Stecker-Einheit 16 und auf der Rückseite eine Steckerbuchsen-Einheit 17 zueinander, beidseitig gegenüberliegend positioniert werden. Die Aufsteckflansche 27 werden wie die Flansche der Drehflansch-Steckverbindungen 2 der Zentralgehäuse 9, entsprechend dem Überstand der Flanschhöhe über das Zentralgehäuse 9 in gleicher Höhe ausgeführt. Die Aufsteckflansche 27' bilden in der Kontour das Spiegelbild zu den Aufsteckflanschen 27, so daß die Aufsteckflansche 27 und 27'' genau dicht abgeschlossen in die Aufsteck-Versenkung der Aufsteckflansche 27' hineinpassen. Die Aufsteckflansche 27' werden im vorliegenden Fall um die Höhe des Aufsteckflansches 27, in das Zentralgehäuse 9 versenkt eingesetzt.
Die Flanschaufsteckgehäuse 9' werden in der räumlichen Kontour beliebig und unabhängig von der Kontour der Zentralgehäuse 9 ausgebildet, werden jedoch in den meisten Anwendungsfällen baugleich und in Anpaßung an die Außenkontour der Zentralgehäuse 9 ausgebildet. Sie erhalten ebenfalls je nach Zielsetzung die Aufsteckflansche 27,27' oder 27'' die genau identisch den Aufsteckflanschen 27,27',27'' der Zentralgehäuse 9 ausgeführt werden, mit Einraststeckern 2' und federbelasteten Klemmhebeln, mit Stecker-Einheiten 16 und den Steckkontakten 16' und den Steckerbuchsen-Einheiten 17 mit Steckerbuchsen 17' mit Strom- und Kommunikationskanälen 3, den innen liegenden Strom- und Versorgungsleitungen und den zugehörigen inneren und äußeren Schleifring- und Induktivkörpern 10',10'',13',13', sowie den Schleifring- und Induktivkörper-Haltern 15 ausgerüstet sind. Je nach Zielsetzung erhalten die Flanschaufsteckgehäuse 9' nur einen Aufsteckflansch 27 oder mehrere, analog beidseitig und in identischer Anordnung wie die Aufsteckflansche der Zentralgehäuse 9, so daß jeweils auf der Frontseite eines Flanschaufsteckgehäuses 9' eine Stecker-Einheit 16 und auf der Rückseite eine Steckerbuchsen-Einheit 17 zueinander, beidseitig gegenüberliegend positioniert wird. Die Flanschaufsteckgehäuse 9' nehmen beliebige Einbauelemente 11 auf, die der jeweiligen Multiblock-Robot-Systemzielsetzung entsprechen wie Batterien, Solar-Zellen, Sensoren, Monitore, Computer-CPU-Einheiten, Fotozellen, Infrarotsensoren, Fernsteuerungs-Antennen und andere Orientierungsperipherie-Komponenten und Peripherie-Einheiten ebenso wie Zwischengetriebe, Greifwerkzeuge, Bearbeitungswerkzeuge oder Fahrzeug-Steuerungskomponenten oder Rotor-Steuerungsbaugruppen, Fahrzeugräder und andere Komponenten für Multiachsen-Operationen und werden entsprechend in der äußeren Kontour ausgebildet. Im vorliegenden Fall werden dem Zentralgehäuse 9 des oberen Multiblocks 1, auf der Frontseite ein Flanschaufsteckgehäuse 9' mit Einbauelementen 11 für einen Computer Monitor, dem Bildschirmeinbau in der Front-Kontour mit Steuerungstastenfeld, Disketten-Einschubfach und mit zusätzlich ausziehbarer Tastatur aufgesteckt und auf der Rückseite ein Flanschaufsteckgehäuse 9' in der Baugröße eines alleinstehenden Tisch-Computers ohne Monitor, mit Einbauelementen 11 die als Computer-Einheit mit der notwendigen Peripherie, wie Plattenspeichem ausgeführt ist, aufgesteckt.
Durch die Maßnahme der identischen Ausbildung aller Autsteckflansche 27,27',27'' wie die der Drehflansch-Steckverbindungen 2, ist es möglich die Flanschaufsteckgehäuse 9' nicht nur auf einen freien Aufsteckflansch 27,27',27'' der Zentralgehäuse 9 aufzustecken, sondern auch auf freie Flansche der Drehflansch-Steckverbindungen 2. In diesem Fall ist das Flanschaufsteckgehäuse 9' über die Antriebs-Einheiten der Drehflansch-Steckverbindungen 2 im inneren der Zentralgehäuse 9, entsprechend dem Multiachsen-Antriebsprinzip der Multiblöcke 1 frei drehbar. Insofern wurde für das Aufstecken des Flanschaufsteckgehäuses 9' mit dem Antennen-Gehäuse, dessen Außenfläche mit Solar-Zellen bestückt ist und dementsprechend Einbauelementen 11, bestehend aus der Solar-Kollektor-Elektronik und aus der Antennen-Einheit mit Sender- und Empfangselektronik und Fernsteuerungskomponenten, der freie Drehflansch der Drehflanschsteckverbindung 2 in Kopf-Position des oberen Multiblocks 1 gewählt, das somit über die Antriebseinheit der Drehflansch-Steckverbindung 2 dieses Multiblocks 1 frei drehbar ist. Das Zentralgehäuse 9 des unteren Multiblocks 1 nimmt über einen Aufsteckflansch 27', entsprechend der Zielsetzung, frontal ein Flanschaufsteckgehäuse 9' mit Einbauelementen 11 auf, die aus Batterie-Zellen bestehen. Auf der Rückseite des Zentralgehäuses 9 ist ein weiteres Flanschaufsteckgehäuse 9' mit Einbauelementen 11, bestehend aus Batterie-Zellen aufgesteckt, das in horizontaler Richtung jeweils beidseitig einen Aufsteckflansch 27' besitzt und in vertikaler Richtung jeweils beidseitig einen Aufsteckflansch 27. Der Multiblock 1 wird durch ein weiteres Flanschaufsteckgehäuse 9' mit Einbaulementen 11, bestehend aus Batterie-Zellen, abgeschlossen. Im zusammengesteckten Zustand werden die Flanschaufsteckgehäuse 9' beim Zusammentreffen von zwei Aufsteckflanschen 27, mit einem Luftspalt in der Größe des zweifachen Überstands der Flanschhöhen, von den Zentralgehäusen getrennt. Dies ermöglicht eine gute Wärmeableitung des Zentralgehäuses 9 und der Flanschaufsteckgehäuse 9', da die Flanschaufsteckgehäuse 9' voneinander und von den Zentralgehäusen 9 über den Luftspalt voneinander getrennt sind. Bei Wahl der Kombination des Aufeinandertreffens eines Aufsteckflansches 27 mit einem versenkten Aufsteckflansch 27' liegen das Zentralgehäuse 9 und das Flanschaufsteckgehäuse 9' ohne Luftspalt voneinander getrennt, direkt aufeinander. Diese Art des Zusammensteckens wird gewählt, wenn die Reduzierung der Wärmeentwicklung im inneren der Multiblocks 1 nicht Vorrang hat vor der Reduzierung der Baumaße die im zusammengesteckten Zustand erreicht werden soll. Die Flanschaufsteckgehäuse 9' können durch die identische Ausführung der Aufsteckflansche 27,27',27'' zueinander und zu den Drehflansch-Steckverbindung 2 auf jedes beliebige Zentralgehäuse 9 eines Multiblocks 1 aufgesteckt werden und sind auch untereinander, durch die annähernde Baugleichheit, ohne die Verbindung mit einem Zentralgehäuse 9 eines Multiblocks 1, beliebig kombinierbar. Gleichzeitig ist die Strom- und Kommunikationsübertragung durch die identische Ausführung pro Aufsteckflansch 27,27',27'' und Drehflansch-Steckverbindung 3, der Strom- und Kommunikationskanäle 3 mit den Stecker-Einheiten 16 und Steckern 16', sowie den Steckerbuchsen-Einheiten 17 und Steckerbuchsen-Einheiten 17' und die inneren und äußeren Schleifring- und Induktivkörpern 10',10'',13',13', sowie den Schleifring- und Induktivkörper-Haltern 15 zwischen den Zentralgehäusen 9 und Flanschaufsteckgehäusen 9' und zwischen den Flanschaufsteckgehäusen 9' untereinander immer gewährleistet.

### Fig. 3

Die oberen zwei Flanschaufsteckgehäuse 9' sind ohne das obere Zentralgehäuse 9 zu einer unabhängigen, alleinstehenden Computer-Einheit, zusammengesteckt. Die Aufsteckflansche 27 trennen die Monitor-Einheit von der Computer-Einheit und bilden den bei Einsatz dieser Flansche entstehenden Lufspalt. Die unteren drei Flanschaufsteckgehäuse 9' sind ohne das untere Zentralgehäuse 9 zu einer unabhängigen, alleinstehenden Batterie-Einheit zusammengesteckt. Die für diese Ausrüstung gewählten versenkten Aufsteckflansche 27' sorgen für eine direkte Verbindung der drei Flanschaufsteckgehäuse 9' ohne Luftspalt. Ebenso können je nach Wärmeentwicklung der Einbauelemente 11 die oberen zwei Flanschaufsteckgehäuse 9' mit versenkten Aufsteckflanschen 27' ausgeführt werden und ohne Luftspalt direkt nebeneinanderliegend zusammengesteckt werden, und die unteren drei Flanschaufsteckgehäuse 9' mit Aufsteckflanschen 27, die einen Luftspalt zwischen Flanschaufsteckgehäusen 9' bilden. Die Strom- und Kommunikationskanäle 3 besitzen jeweils im obersten Flanschbereich der Drehflansch-Steckverbindungen 2 und der Aufsteckflansche 27,27' die Stecker-Einheiten 16 mit den Steckkontakten 16' und den Steckerbuchsen-Einheiten 17 mit Steckerbuchsen 17' und sind somit Endstecker und Steckerbuchsen für die Strom- und Versorgungs-, sowie Kommunikationsleitungen. Insofern können freiliegende Aufsteckflansche 27,27',27'' und auch freiliegende Flansche der Drehflansch-Steckverbindungen 2 durch Netzkabel jederzeit an das öffentliche Stromnetz angeschlossen werden und Flanschaufsteckgehäuse 9' mit Einbauelementen 11, bestehend aus Batterie-Zellen zur Netz-Aufladung angeschlossen werden und unabhängige, alleinstehende Computer-Einheiten in den Flanschaufsteckgehäusen 9', Multiblock-Normteile 1 oder komplette Multiblock-Robotsysteme, direkt mit dem Stromnetz verbunden werden.

### Fig. 4

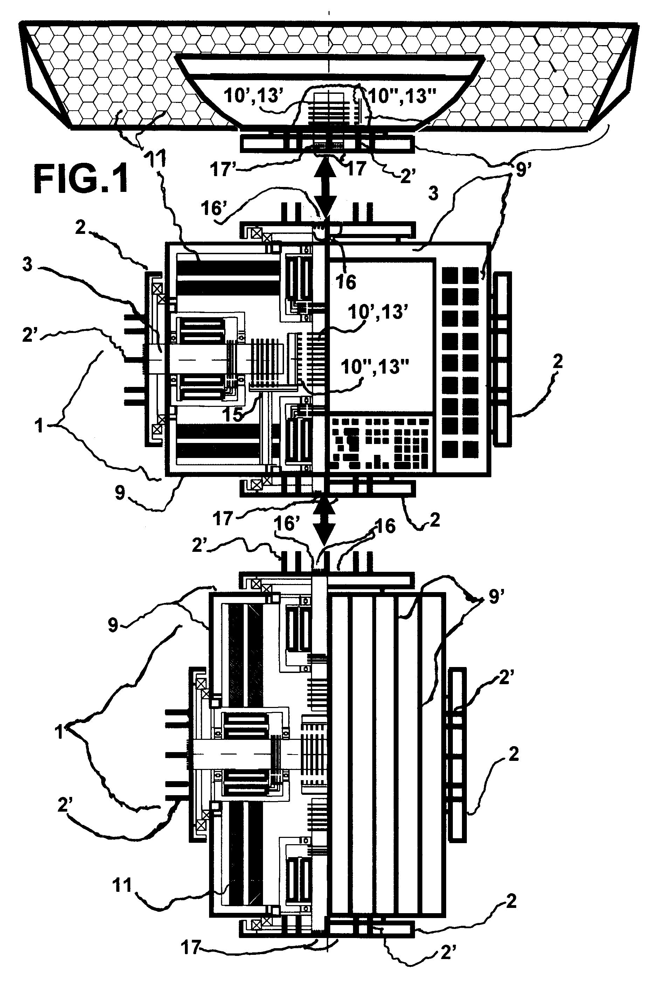

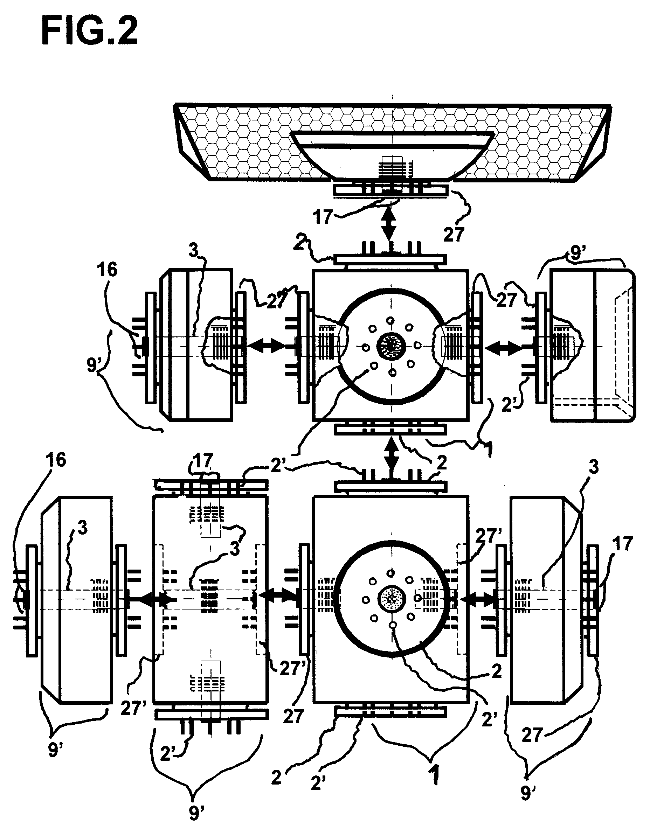

Das Zentralgehäuse 9 des unten angeordneten Multiblocks 1 besitzt wie in Fig. 1,2 frontal und rückseitig, je einen horizontalen Aufsteckflansche 27. Der frontale Aufsteckflansch nimmt wieder im Flanschaufsteckgehäuse 9' als Einbauelemente 11 eine Monitor-Einheit auf und rückseitig im Flanschaufsteckgehäuse 9' als Einbauelemente 11 eine Computer-Zentraleinheit mit den notwendigen Peripheriegeräten. Auf die obere horizontale Drehflansch-Steckverbindung 3 ist hier wieder ein Multiblock 1 mit einem identischen Zentralgehäuse 9 um 90° gedreht aufgesteckt, das jedoch keine Aufsteckflansche 27 vorsieht. Dieser Multiblock 1 ist als Kopf-Einheit eines Multiblock-Roboters ausgeführt. Die notwendigen Zentralgehäuse 9 für die Aufnahme der Einbauelemente 11 sind hier auf die beiden horizontalen und auf die obere vertikale Drehflansch-Steckverbindung 2 aufgesteckt. Das linksseitig aufgesteckte Flanschaufsteckgehäuse 9' ist als Bilderkennungs-Einheit ausgeführt und nimmt als Einbauelemente 11 die Bilderkennungs- und Sensoren-Elektronik auf. Das rechtsseitig aufgesteckte Flanschaufsteckgehäuse 9' ist als Spracherkennungs- und Sprachwiedergabe-Einheit ausgeführt und nimmt als Einbauelemente 11 die notwendigen Elektronikbauteile auf. Das vertikal aufgesteckte Flanschaufsteckgehäuse 9' ist wieder als Antennen-Gehäuse ausgeführt, dessen Außenfläche mit Solar-Zellen bestückt ist und dementsprechend Einbauelemente 11, bestehend aus der Solar-Kollektor-Elektronik und aus der Antennen-Einheit mit Sender- und Empfangselektronik und Fernsteuerungskomponenten aufnimmt, die identisch zu der in Fig. 1 und 2 aufgezeigten Art sind.

### Fig. 5

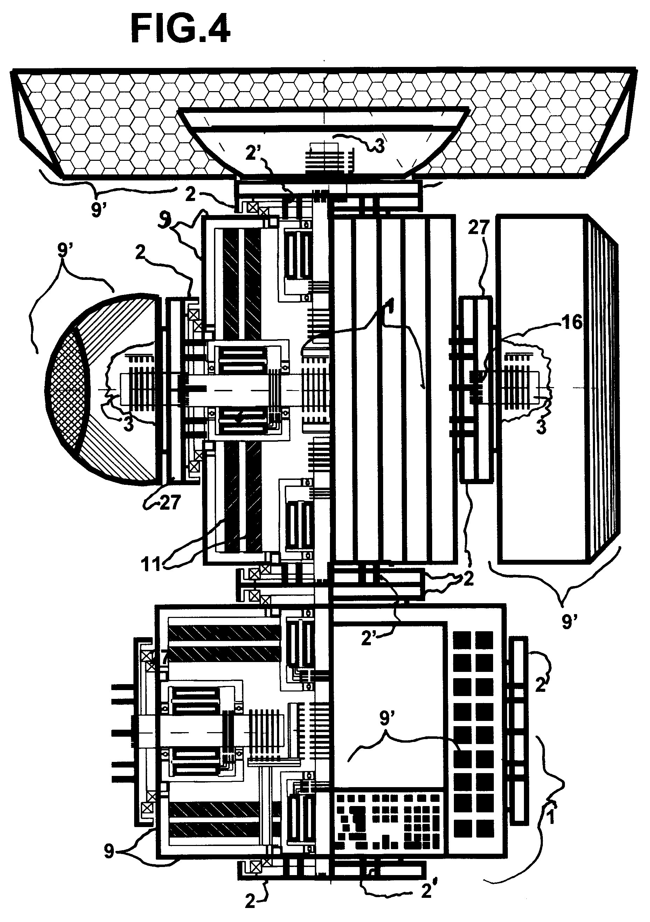

Die beiden Multiblocks 1 in unterschiedlicher Kontour besitzen je ein Zentralgehäuse 9 mit jeweils zwei horizontalen und vertikalen Drehflansch-Steckverbindungen 2 und jeweils einen frontalen und einen rückseitigen, horizontalen Aufsteckflansch 27' für die Aufnahme von Flanschaufsteckgehäusen 9' mit Einbauelementen 11. Die vertikale Drehflansch-Steckverbindung 2 des langgestreckten Zentralgehäuses 9' in Fußposition soll in Pfeilrichtung mit einem Flanschaufsteckgehäuses 9', das als eine Bilderkennungs- und Sensoren-Einheit gemäß der Fig. 4 ausgeführt ist, zusammengesteckt werden.

### Fig. 6

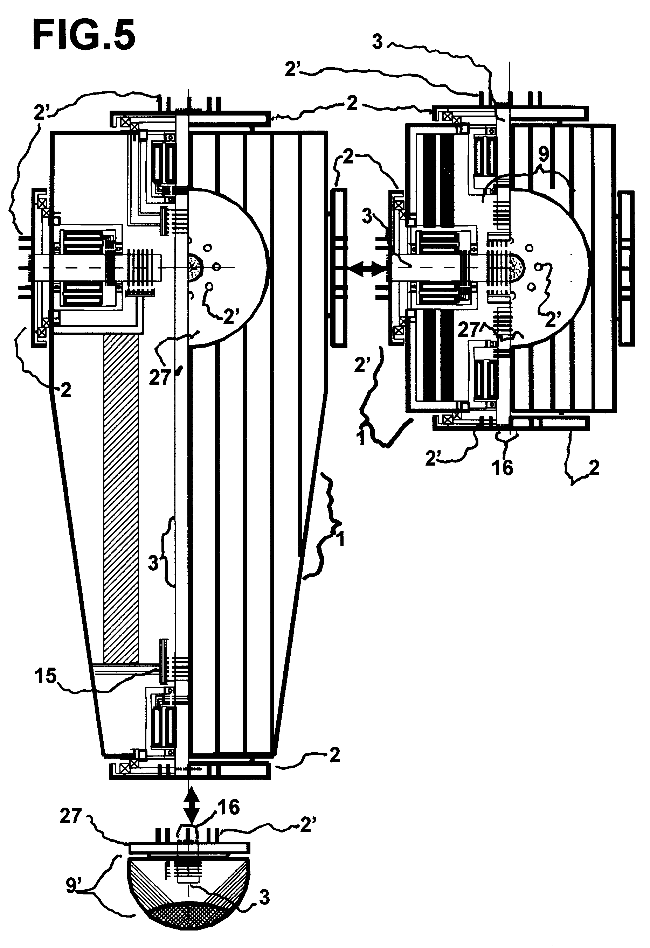

Zwischen den zwei Zentralgehäuse 9 gemäß der Fig. 5 ist ein Flanschaufsteckgehäuse 9' vorgesehen, das als elektromechanisches Zwischengetriebe ausgeführt ist und als Einbauelemente 11 die Getriebeteile. Elektrik und Elektronik zur Steuerung aufnimmt. Dieses Zentralgehäuse 9' ist beidseitig mit Aufsteckflanschen 27'' ausgeführt, die an Ihrer Oberseite das Versenkteil eines Aufsteckflansches 27' aufweisen, so daß die Oberkante dieses kombinierten Aufsteckflansches 27',27'' mit der Oberkante der Außenkontour des Flanschaufsteckgehäuses 9' abschließt. Die zwei Strom- und Kommunikationskanäle 3 im Inneren des Flanschaufsteckgehäuses 9', sind mittig voneinander getrennt und nehmen neben den beidseitigen Schleifring- und Induktivkörpern 10',10'',13',13' beidseitig die Untersetzungs-oder Übersetzungs-Getrieberitzel auf. Das Flanschaufsteckgehäuse ist in der Außenkontour spiegelbildlich ausgeführt, so daß es auch um 180° gedreht aufgesetzt werden kann, je nach gewünschter Unter- oder Übersetzungsrichtung. Das Flanschaufsteckgehäuse 9' besitzt an der Außenkontour einseitig Einraststecker 2' die gleich den Einraststeckern 2' auf den Aufsteckflanschen 27,27',27'' und den Drehflanschsteckverbindungen 2 sind. Das Zentralgehäuse 9 ist in der Außenkontour mit dazu passenden Einrastbuchsen ausgerüstet, so daß das Flanschaufsteckgehäuse 9' beim Aufstecken auf die Drehflansch-Steckverbindungen 2 des Zentralgehäuses 9 mit den Einraststeckern 2' festgehalten und gegen die Drehkraft des rechten Zentralgehäuses 9 still steht. Die Drehkraft wird dann über die Strom- und Informationskanäle 3 des Flanschaufsteckgehäuses 9' die gleichzeitig als Antriebs und Abtriebsgetriebewelle dienen, auf die Drehflansch-Steckverbindung 2 des gegenüberliegenden Zentralgehäuses 9 übertragen. Auf dieser Seite befinden sich keine Einraststecker 2' an der Außenkontour des Flanschaufsteckgehäuses 9' und keine drehverhindernde Verbindung des Multiblocks 1 an der Außenkontour des Zentralgehäuses 9, so daß die Dreh-Kraft durch das Zwischengetriebe feinstufig von dem rechtsliegenden Multiblock an den linksliegenden Multiblock 1 übertragen wird, oder je nach Steuerungsimpulsen in Gegenrichtung. In Fußposition des links angeordneten Zentralgehäuses 9 ist ein Aufsteckgehäuse 9' vorgesehen, das als Fingergreifer mit Einbauelementen 11, bestehend aus elektromechanischem, gegebenenfalls hydraulischem Antrieb und der entsprechenden Steuerungselektrik und Elektronik, ausgerüstet ist. Um dieses Flanschaufsteckgehäuse 9' unverrückbar und fest auf der Drehflansch-Steckverbindung 2 mit dem Aufsteckflansch 27 zu halten, ist zusätzlich zu den Einraststeckern 2' und den federbelasteten Klemmhebeln die grundsätzlich die sichere Aufsteckung der Gehäuse gegeneinander absichern, eine horizontale Schraubsicherung 28 vorgesehen die in 90° zur Drehachse wirksam wird. Das Aufsteckgehäuse 9' besitzt einen Aufsteckflansch 27 der im Durchmesser kleiner ist, als die gegenüberliegende Drehflansch-Steckverbindung 2 des Zentralgehäuses 9. Die gegenüber positionierte Außenflanschseite der Drehflansch-Steckverbindung 2 erhält hier einen Aufsteckflansch 27' mit entsprechendem Innendurchmesser, so daß nach dem Aufstecken ein fester Sitz des Aufsteckflansches 27 des Flanschaufsteckgehäuses 9' im Aufsteckflansch 27' der Drehflansch-Steckverbindung 2 vorliegt. Die Außenkante des Aufsteckflansches 27 erhält an der Peripherie Durchgangsbohrungen und die Außenkante des Aufsteckflansches 27' an der Drehflansch-Steckverbindung 2 erhält Gewindebohrungen in identischer Position. Nach dem Aufstecken werden Befestigungsschrauben in die übereinandersitzenden Durchgangslöcher des Aufsteckflansches 27 und die Gewinde des Aufsteckflansches 2' horizontal eingeschraubt und der Sitz der beiden Flansche zueinander zusätzlich gesichert.

### Fig. 7

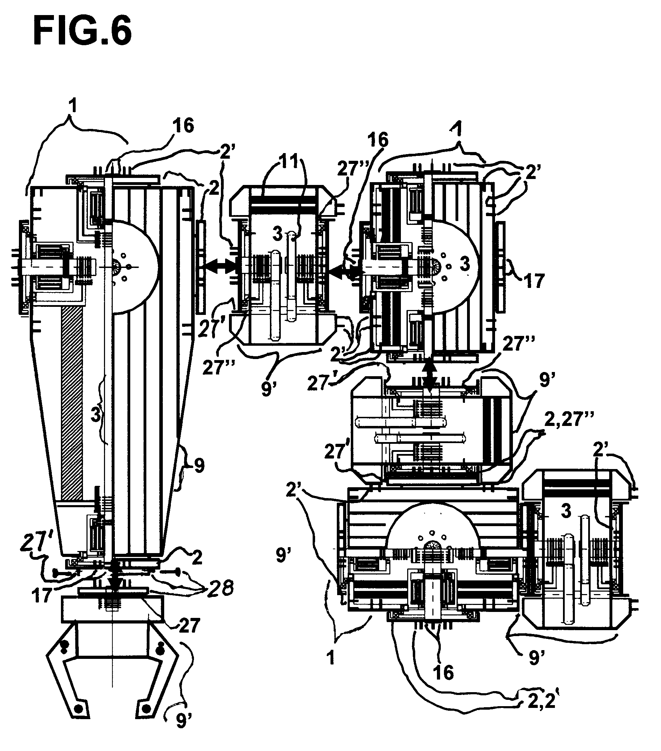

Die Zentralgehäuse 9 der Multiblocks gemäß der Fig. 5 und 6 nehmen rückseitig Flanschaufsteckgehäuse 9' auf, die als Elektrikgehäuse ausgeführt sind und frontal als Elektronikgehäuse. Die Außenflächen der beidseitigen Flanschaufsteckgehäuse 9' sind mit Solar-Zellen bestückt und nehmen als Einbauelemente 11, die Solar-Kollektor-Elektronik und auf und ergänzende Elektrik- und Elektronik zusätzlich zu den Einbauelementen 11 in den Zentralgehäusen 9, für die Schaltung und Steuerung der Antriebs-, Basisgetriebe- und Generator-Einheiten in den Zentralgehäusen 9. Die Flanschaufsteckgehäuse 9' erstrecken sich hier, sowohl bei den langgestreckten Multiblocks 1 wie auch bei den kurzen Multiblocks 1 genau flächendeckend über die gesamte Außenkontour der Zentralgehäuse 9. Die Flanschaufsteckgehäuse 9' werden über die Aufsteckflansche 27 auf die versenkten Aufsteckflansch 27' der Zentralgehäuse 9 aufgesteckt und bilden somit jeweils einen geschlossenen Multiblock 1 ohne Luftspalt zwischen den Flanschaufsteckgehäusen 9' und den Zentralgehäusen 9. Die Aufsteckflansche 27,27',27'' können wie die Drehflansch-Steckverbindungen 2 horizontal und vertikal beliebig an den Aufsteckgehäusen 9' oder den Zentralgehäusen 9, einzeln, oder mehrere verteilt nebeneinander, aufgesetzt werden.

### Fig. 8

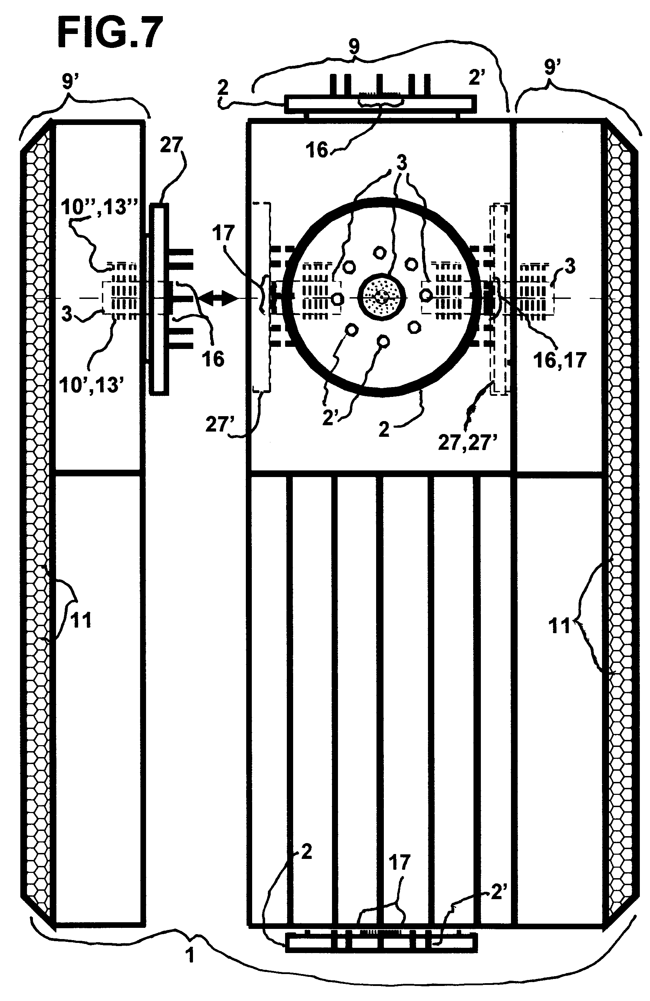

Die Multiblocks 1 gemäß der Fig. 5,6 und 7 werden hier für die Antriebsachse eines Elektro-Fahrzeugs eingesetzt. Nach rechts ist die Verbindung mit einem Flanschaufsteckgehäuse 9' vorgesehen, das als Antriebsrad ausgeführt ist und beidseitig Aufsteckflansche 27 vorsieht und in der Radnabe den Strom und Kommunikationskanal 3 mit den Schleifring- und Induktivkörpern 10',10'',13',13' und Schleifring- und Induktivkörper-Halter 15 aufnimmt. Das Zentralgehäuse 9 wird mit dem Aufsteckflansch 27 auf die Drehflansch-Steckverbindung 2 aufgesteckt. Das Aufsteckgehäuse 9' wird aufgrund der hohen zu übertragenden Drehkräfte und Beanspruchungen, zusätzlich zu der Aufstecksicherung mit federbelastenden Klemmhebeln, mit einer vertikalen Schraubsicherung 28 auf der Drehflansch-Steckverbindung 2 gesichert. Hier wird im Gegensatz zur horizontalen Schraubsicherung 28 der Fig. 6, in Richtung der Drehachse die Flanschoberfläche der Drehflansch-Steckverbindung 2 mit Gewindebohrungen ausgeführt und beide Aufsteckflansche 27 des Aufsteckgehäuses 9' erhalten identische Durchgangsbohrungen. Die Schraubsicherung 28 erfolgt nun durch Befestigungsschrauben die von der Außenseite des Fahrzeugrades durch die Durchgangsbohrungen durchgesteckt werden und in die positionsidentischen Gewindebohrungen der Drehflansch-Steckverbindungen 2 eingreifen und angezogen werden. An der Außenseite des Fahrzeugrades wird auf den Aufsteckflansch 27 ein Flanschaufsteckgehäuse 9' aufgesteckt, das als Bilderkennungs-und Infrarot-Einheit ausgeführt ist mit den Einbauelementen 11 die aus Bilderkennungs- und aus Sensoren-Elektronik bestehen. Vom oberen Multiblock 1 nach links ist von der Drehflansch-Steckverbindung 2 und den Aufsteckflansch 27 die Verbindung mit Aufsteckgehäusen 9' vorgesehen, die einen Elektro-Fahrzeug-Grundrahmen bilden, der gänzlich aus alleinstehenden Aufsteckgehäusen 9' besteht.

### Fig. 9

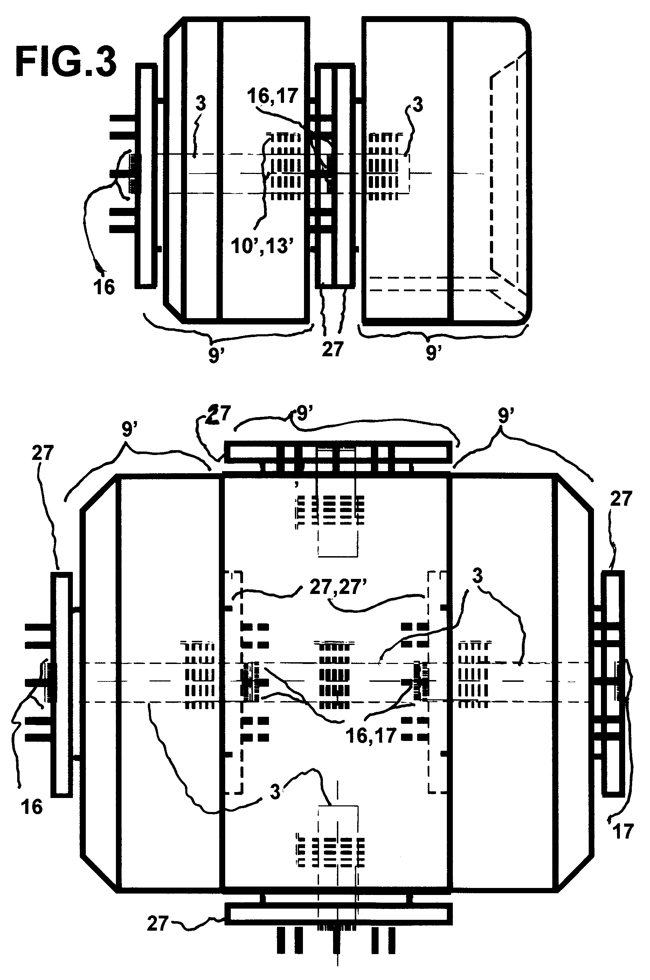

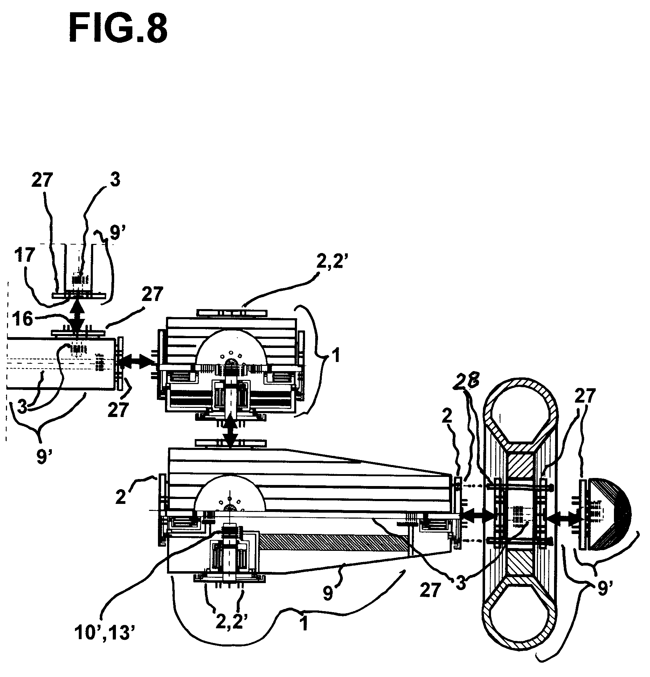

Multiblocks 1 mit Zentralgehäusen 9 und aufgesteckten Flanschaufsteckgehäusen 9' werden in Kombination mit alleinstehenden Flanschaufsteckgehäusen 9' für unterschiedlichste Multiachsen-Anwendungen eingesetzt. In vorliegendem Fall wird aus lang durchlaufenden, unabhängigen, alleinstehenden Flanschaufsteckgehäusen 9' der Fahrzeug-Grundrahmen für ein Elektrofahrzeug gebildet, und in Rasterabständen mit Aufsteckflanschen 27,27' bestückt, die in den Rasterabständen identisch zu den Rasterabständen von Multiblocks 1 sind, so daß Multiblocks 1 ohne oder mit Flanschaufsteckgehäusen 9', in den Rasterabständen der Drehflansch-Steckverbindungen 2 und der Aufsteckflansche 27,27' der aufgesteckten Flanschaufsteckgehäuse 9' immmer gegeneinander austauschbar, bzw. wahlweise eingesetzt werden können. An den vier Eckpunkten des Fahrzeug-Grundrahmens sind auf die horizontalen Aufsteckflansche 27 der alleinstehenden Flanschaufsteckgehäuse 9', in der Ausführung anders als in der Fig. 8 aufgezeigt, zwecks Zusammensteckung der rechten Antriebsachse, je ein Multiblock 1 ohne Flanschaufsteckgehäuse 9', direkt mit den horizontalen Drehflansch-Steckverbindungen 2 aufgesteckt. Auf die obere vertikale Drehflansch-Steckverbindung 2 dieser Multiblocks 1 wird jeweils ein weiteres, identisches Zentralgehäuse 9 eines Multiblocks 1 aufgesetzt. Die beiden oberen Zentralgehäuse 9 sind dann im vorderen Teil des Fahrzeug-Grundrahmens mit drei hintereinander aufgesteckten Flanschaufsteckgehäusen 9' zu einem geschlossenen Multiblock 1 zusammengefaßt. Hier schließt sich an das Zentralgehäuse 9 ein Flanschaufsteckgehäuse 9' mit beidseitigem Aufsteckflansch 27 und mit integrierten Einbauelementen 11 bestehend aus Zwischengetriebe und Elektrik- und Elektronikkomponenten für Lenkung, Antrieb und Bremsenergie-Rückgewinnung, dann entsprechend der Ausführung gemäß Fig. 8 ein Flanschaufsteckgehäuse 9' mit beidseitigem Aufsteckflansch 27 das als Fahrzeugrad ausgebildet ist, auf das abschließend ein Flanschaufsteckgehäuse 9' mit einseitigem Aufsteckflansch 27 mit Einbauelementen 11 für Bilderkennung und Orientierungs-Sensorik aufgesteckt ist. Die beiden Multiblocks 1 im hinteren Teil des Fahrzeug-Grundrahmens sind identisch wie die vorderen Multiblocks 1 ausgeführt, nehmen jedoch über den horizontalen Aufsteckflansch 27' drei zu einer Baterie-Einheit zusammengesteckte Flanschaufsteckgehäuse 9' auf. Der Fahrzeug-Grundrahmen nimmt mittig und hinten an den Aufsteckflanschen 27 vier weitere dieser Baterie-Einheiten in den zusammengesteckten Flanschaufsteckgehäusen 9' auf. Desweiteren sind an den Aufsteckflanschen 27 des Fahrzeug-Grundrahmens, weitere Flanschaufsteckgehäuse 9' für Bilderkennung und Orientierungs-Sensorik aufgesteckt. Der Fahrzeug-Grundrahmen bildet somit eine Einheit die aus unabhängigen, alleinstehenden Flanschaufstecktgehäusen 9' und aus Multiblocks 1 die aus Zentralgehäusen 9 mit seitlich aufgesteckten Flanschaufsteckgehäusen 9' an den Aufsteckflanschen 27,27' und Drehflansch-Steckverbindungen 2 zusammengesteckt sind und mit Schraubsicherungen 28 an hohen Belastungsübergängen zusätzlich gesichert sind. Dieses Multiblock-Robot Gesamtsystem erlaubt die schnelle weitere Kombination und Ausrüstung mit Aufsteckgehäusen 9' und zusätzlichen Aufsteckflanschen 27,27'27'', zur Aufnahme der Karosserie und Integration von Aufsteckgehäusen 9' deren Außenflächen mit Solar-Zellen bestückt sind, mit Antennen gemäß der in Fig. 1,2 und 4 aufgezeigten Art und von Aufsteckgehäusen 9' in der Ausführung als Computer-Einheit und Monitor-Einheit gemäß der in Fig. 1,2,3 und 4 aufgezeigten Art. Bei einem derartigen Multi-Robot-Elektro-Fahrzeug sind alle vier Räder in Antrieb, Bremskraft-Rückgewinnung, Lenkung und Stoßdämpfung individuell steuer- und regelbar. Die gesamte Struktur des Fahrzeugs wird an allen Steuer- und Regelknoten wie bei den selbstoperierenden Multiblock-Robotern, über die zentral durchlaufenden Strom- und Kommunikationskanäle 3 erreicht, mit Strom versorgt und überwacht. Das Fahrzeug ist dementsprechend ausgerüstet für eine Steuerung vom Fahrzeug aus, gegebenenfalls unter Nutzung von Steuerungssignalen über Antennenkontakt und Übermittlung von externen Steuerungshilfen oder vollständig mit externen Fernsteuerung, wie mittels Signalen von Satelliten oder anderen Signal-Stützpunkten.

## Patentansprüche

1. Robotsystem mit robot-spezifschen Wirkungsweisen, dadurch gekennzeichnet, daß zusätzlich zu den Robot-Block-Normteilen (1) die aus einem Zentralgehäuse (9) bestehen, das sowohl die Antriebs-, Basisgetriebe- und Generatoneinheiten als auch die notwendigen Einbauelemente (11) für selbstoperierende Basisfunktionen aufnehmen, Robot-Block-Normteile (1) mit Flanschaufsteckgehäusen (9') eingesetzt werden, so daß ein Zentralgehäuse (9) gebildet wird in dem die Antriebs-, Basisgetriebe- und Generatoreinheiten und die Einbauelemente (11) der Basis- und Steuerungselektronik für diese Einheiten untergebracht werden und in Flanschaufsteckgehäusen (9') mit unterschiedlicher, weitgehend baugleicher Kontour die Einbauelmente (11') für weiterreichende selbstoperierende Funktionen untergebracht werden und durch den Aufsteckvorgang, die Strom- und Kommunikationsverbindung zwischen den Flanschaufsteckgehäusen (9') und dem Zentralgehäuse (9) geschlossen wird.

2. Robotsystem mit robot-spezifischen Wirkungsweisen nach Anspruch 1, daß mehrere Flanschaufsteckgehäuse als insich selbständige Einheiten (9') übereinander und nebeneinander angeordnet werden.

3. Robotsystem mit robot-spezifischen Wirkungsweisen nach Anspruch 1 oder 2, dadurch gekennzeichnet, daß die Flanschaufsteckgehäuse (9') mit Aufsteckflanschen (27,27',27'') und Einrast-Steckern (2') und horizontalen und vertikalen Schraubsicherungen (28) ausgerüstet sind, die in der Kontour und Position identisch mit den Drehflansch-Steckverbindungen (2) der Zentralgehäuse (9) sind und mit Steckereinheiten (16) mit Steckkontakten (16') und mit Steckerbuchsen-Einheit (17) und Steckerbuchsen (17') in identischer Ausführung zu den Steckereinheiten (16) und Steckkontakten (16') und den Steckerbuchsen-Einheiten (17) und Steckerbuchsen (17') der Drehflansch-Steckverbindungen (2) ausgeführt werden und die Zentralgehäuse (9) ebenfalls mit Aufsteckflanschen (27,27',27'') und Einrast-Steckern (2') mit Stecker-Einheiten (16), Steckkontakten 16', Steckerbuchsen-Einheiten (17) und Steckerbuchsen (17') ausgerüstet werden, so daß die Flanschaufsteckgehäuse (9') sowohl auf freie Drehflansch-Steckverbindungen (2) aufgesteckt werden können, als auch auf freie Aufsteckflansche (27,27',27'') der Zentralgehäuse (9) und auch untereinander, von einem Flanschaufsteckgehäuse (9') zu einem weiteren Flanschaufsteckgehäuse (9').

4. Robotsystem mit robot-spezifischen Wirkungsweisen nach einem der Ansprüche 1 bis 3, dadurch gekennzeichnet, daß die Steckereinheiten (16) mit Steckkontakten (16') und mit Steckerbuchsen-Einheit (17) und Steckerbuchsen (17') in einen zentralen Strom- und Kommunikationskanal (3) einmünden, der identisch mit dem Strom- und Kommunikationskanal (3) der Drehflansch-Steckverbindungen (2) ausgeführt wird und über identische innere und äußere Schleifring- und Induktivkörper (10'10'',13',13''), in das innere der Flanschaufsteckgehäuse (9') und der Zentralgehäuse (9) führen und jede der Steckereinheiten (16) mit Steckkontakten (16') als auch die Steckerbuchsen-Einheiten (17) mit Steckerbuchsen (17') der im Kernbereich der zentralen Strom- und Kommunikationskanäle (3) liegenden Strom- und Versorgungsleitungen, direkt mit üblichen Netzsteckern und Steckdosen für einen Anschluß an das öffentliche Netz nutzbar sind.

5. Robotsystem mit robot-spezifischen Wirkungsweisen nach einem der Ansprüche 1 bis 4, dadurch gekennzeichnet, daß die Flanschaufsteckgehäuse (9') Multiblock-Robot Einbauelemente (11) wie Batterien, Solarzellen, Sensoren, Monitore, Computer-CPU-Einheiten, elektronische Steuerungs-Platinen, Fotozellen, Infrarotsensoren, Fernsteuerungs-Antennen und andere Orientierungsperipherie-Komponenten und Peripherie-Einheiten sowie Getriebe, Greifwerkzeuge, Bearbeitungswerkzeuge und andere Komponenten für Multiachsen-Operationen aufnehmen und zusammengesteckt mit den Zentralgehäusen (9) der Multiblock-Robot-Normteile (1) selbstoperierende Multiblock-Robot Funktionen gewährleisten und auch untereinander, ohne Zentralgehäuse (9) zusammengesteckt werden und dann als selbständige, Multiblock-Robot kompatible Funktionseinheiten, als PC's, Steuerungseinheiten, Baterie-Einheiten, Greifeinheiten, Fahrzeugrahmen und Multiachsen-Operationseinheiten eingesetzt werden.
